# FASCICULE DE BREVET EUROPEEN

(11) **EP 4 062 752 B1**
(45) Date de publication et mention de la délivrance du brevet: **14.02.2024**
(21) Numéro de dépôt: 22164494.1
(22) Date de dépôt: 25.03.2022
(51) Int. Cl.: A01G 17/02, A01G 17/16, A01C 11/04

(54) **MODULE DE COMPLANTATION DE PLANTS DE VIGNE, DISPOSITIF DE COMPLANTATION INCLUANT LEDIT MODULE**
MODUL ZUR COMPLANTATION VON REBENPFLANZEN, VORRICHTUNG ZUR COMPLANTATION, DIE DIESES MODUL UMFASST
COMPANION PLANTING MODULE FOR VINE SEEDLINGS, COMPANION PLANTING DEVICE INCLUDING SAID MODULE

(30) Priorité: 26.03.2021 FR 2103091
(43) Date de publication de la demande: 28.09.2022
(73) Titulaire: ELEVEN & CO, 16100 Merpins (FR)
(72) Inventeur: HUBERT, Patrick, 16370 CHERVES RICHEMONT (FR)
(74) Mandataire: Aquinov

(56) Documents cités:
- FR-A1- 2 811 197
- FR-A1- 2 897 235
- US-A- 4 920 900
- Anonymus: "Les outils pour la complantation de vigne | mon-ViTi", , 31 janvier 2018 (2018-01-31), XP055860826, Extrait de l'Internet: URL:https://www.mon-viti.com/articles/mach inisme/les-outils-pour-la-complantation-de -vigne [extrait le 2021-11-12] & Jacques Lacourt: "Pince arrache cep (5/5)", , 8 janvier 2014 (2014-01-08), XP055860831, Extrait de l'Internet: URL:https://www.youtube.com/watch?v=fgCDVY I-Xsk&t=18s&ab_channel=JacquesLacourt [extrait le 2021-02-11]

## Description

L'invention concerne un module de complantation de plants de vigne, et l'invention couvre également le dispositif de complantation incluant ledit module.

Dans certaines parcelles de vignes, plus particulièrement des parcelles possédant des ceps de vignes anciens, des ceps peuvent mourir ou être affaiblis pour différentes raisons. La maladie peut en effet toucher un cep plus fragile, de façon isolée si bien qu'il meure ou se dégrade. Une autre raison peut être une blessure importante généré par un outil d'entretien de la vigne, mal conduit, ce qui peut d'ailleurs arriver sur des vignes plus jeunes. De tels plants dégradés ou morts sont des lieux privilégiés de développement des maladies susceptibles d'atteindre les plants voisins, ce qu'il faut bien entendu limiter.

Lorsque le nombre est limité, il est préférable d'extraire le plant mort et de le remplacer par un nouveau pied, c'est la technique dite de complantation. Ceci est plus économique que de replanter toute la parcelle et surtout cela permet de conserver des vieux plants qui, même s'ils n'ont pas nécessairement un très bon rendement, peuvent produire des baies de très grande qualité, sont très résistants à la maladie, à la sècheresse, notamment. De plus, pour conserver certaines appellations, il est nécessaire que la parcelle soit plantée avec une densité donnée et tout manque total ne permettant pas de maintenir cette densité déterminée, peut conduire au déclassement.

Si la technique de complantation paraît simple, remplacer un cep existant par un nouveau plant, elle ne l'est pas. En effet, le remplacement ne peut s'effectuer qu'avec un plant jeune qui doit pouvoir prendre sa place au milieu de ceps voisins parfaitement implantés, beaucoup plus étoffés, qui prennent de la place et ont tendance à s'étaler vers l'espace libre. Le plant doit aussi être tutoré pour être maintenu en terre alors que les ceps voisins ont un port suffisant et se tiennent en terre, seuls les sarments étant palissés. L'intervention pour la complantation est délicate du fait de la présence des fils de palissage tant pour l'extraction du cep mort que pour la mise en terre du jeune plant. Il faut donc pouvoir extraire le cep mort de façon propre, sans dégrader le palissage. Le sol est également travaillé en périphérie des ceps, dans l'interrangs, dans l'interceps, au plus près mais aucunement au droit du cep mort. Or, comme il est bien connu, les plants de vigne ont un système racinaire qui est profond pour permettre auxdits plants, même en cas de sécheresse, surtout lorsque les vignes ne sont pas irriguées et que le climat est chaud, d'aller puiser l'eau nécessaire à son développement. L'extraction est donc délicate.

A fortiori, dans le cas d'un jeune plant, il faut lui permettre de s'implanter rapidement dans le sol et de développer son système racinaire profondément sans qu'il ait à s'épuiser pour prendre sa place. Un ameublissement de la terre est facilitateur d'une rapide implantation, comme dans toute culture, et synonyme d'un rapide développement profond des racines du jeune plants afin de pourvoir résister dès la première année à des conditions climatiques difficiles. D'ailleurs, pour faciliter aussi cette reprise, il serait utile de réalisation un arrosage d'une part pour apporter de l'eau pendant une période donnée pour que le plant prenne en terre et racine de façon la plus rapide possible et surtout pour sceller le plant en terre en chassant l'air autour des racines de façon qu'elles soient en capacité d'absorber très rapidement l'eau nécessaire, en évitant un pourrissement des racines au contact de l'air. Il faut donc un décompactage préalable du sol au lieu d'implantation et immédiatement après un scellement naturel au sein du sol décompacté par l'apport d'eau.

Dans le domaine agricole comme dans les autres domaines, la pénurie de main d'oeuvre, les coûts de la main d'oeuvre, la lutte contre les troubles musculosquelettiques sont autant de raisons de chercher des solutions mécanisées pour les différentes tâches à réaliser. La mécanisation permet aussi de réaliser de telles opérations beaucoup plus rapidement, donc dans des créneaux météorologiques les plus favorables. Le but de la présente invention est aussi de permettre de réaliser l'ensemble des tâches de façon mécanique, pilotée, et surtout rapidement si bien que ces opérations peuvent être conduites rapidement lorsque les conditions notamment climatiques sont réunies mais aussi entre les autres opérations d'entretien de la vigne qui sont nécessairement prépro-grammées et qui requiert des créneaux météorologiques également adaptés.

Le but de la présente invention est de proposer un module de mise en place de jeunes plants de vigne dans le cadre d'une complantation et un dispositif complet incluant ledit module afin d'assurer toutes les opérations mécaniques liées à cette complantation. Un tel module est associé à un engin agricole du type tracteur viticole ou un enjambeur, le choix de l'engin motorisé n'ayant aucun impact sur la présente invention. Quant au dispositif complet, il intègre des moyens connus en complément.

C'est ainsi que l'on connaît un dispositif mobile pour l'arrachage d'éléments verticaux, notamment des pieds de vigne ou des piquets, objet d'une demande de brevet français N°19 13399 en date du 28/11/2019 (FR3103676A1) au nom du même déposant que la présente invention. Ce dispositif est particulièrement avantageux car il permet l'arrachage de ceps de vignes ou de piquets, en étant monté sur l'avant d'un engin agricole se déplaçant dans l'interrangs, sans avoir à manoeuvrer et permettant de travailler le rang à droite ou le rang à gauche, en fonction des besoins. Ce dispositif d'arrachage est attractif car il respecte le palissage du fait de sa compacité, il est aisé à manoeuvrer, il permet l'arrachage de tout type de cep de vigne, même avec un système racinaire encore important du fait de sa puissance. US 4 920 900 A, FR 2 897 235 A1 et FR 2 811 197 A1 illustrent d'autres machines à planter de jeune plant.

La présente invention est réalisée selon la revendication 1 et concerne un module de complantation d'un jeune plant P de vigne et de son marquant, en lieu et place d'un cep de vigne arraché dans un rang de ceps de vigne en place, ledit module comportant un châssis et des moyens de positionnement, destinés à être montés sur un véhicule agricole T, apte à se déplacer en avant suivant un sens F. Selon l'invention, le module comporte un mât mobile en translation verticale, équipé de moyens plantoirs comprenant un enfonce marquant, muni de moyens de manoeuvre en translation verticale, d'un marquant et dudit jeune plant P lié audit marquant, des moyens de maintien et de guidage dudit marquant, un cône creux de plantation, formé par une paire de demi-cônes creux, ledit cône creux étant orienté pointe vers le bas, chaque demi-cône ayant des moyens de manoeuvre, ledit cône pouvant prendre au moins deux positions l'une avec les demi-cônes fermés et l'autre avec les demi-cônes ouverts.

Selon une caractéristique de l'invention, le module de complantation prévoit un enfonce marquant, muni de moyens de manoeuvre en translation verticale, d'un marquant et dudit jeune plant P lié audit marquant, est disposé coaxialement avec le cône creux de plantation.

Selon l'invention, le module de complantation est équipé d'un décompacteur, montée en translation verticale par rapport audit mât, avec des moyens de manoeuvre en translation verticale.

Ce décompacteur comprend un arbre, monté mobile en rotation et entraîné en rotation par une motorisation, ledit arbre portant à son extrémité une hélice.

Ce décompacteur est disposé en amont des moyens plantoir par rapport au sens avant de déplacement F.

Le module de complantation selon l'invention comprend, selon une architecture avantageuse, un support tubulaire fixe avec un bras, mobile en translation dans ledit support tubulaire fixe, des moyens de manoeuvre en translation disposés sur l'extrémité proximale dudit bras, un avant-bras porté par l'extrémité distale dudit bras, orienté verticalement, une poutre fixe, tubulaire, solidaire dudit avant-bras, orientée parallèlement au plan de roulage du véhicule agricole et parallèlement à la direction de déplacement F du véhicule agricole T, et un support, mobile en translation horizontale dans ladite poutre fixe, équipé de moyens de manoeuvre en translation dudit support par rapport à ladite poutre fixe, ledit support recevant le mât mobile en translation verticale. Des garde-fil assurent la protection des fils de palissage.

L'invention couvre aussi le dispositif de complantation, comprenant un véhicule agricole T, équipé d'au moins un module de complantation mais aussi de moyens d'arrachage d'un cep de vigne identifié.

De tels moyens d'arrachage sont disposés à l'avant dudit véhicule agricole et comprennent une tête d'arrachage munie d'au moins une mâchoires destinées à venir enserrer le cep identifié à arracher et des moyens de manoeuvre en translation verticale de ladite tête d'arrachage.

Les moyens d'arrachage sont montés pivotants avec des moyens de manoeuvre en pivotement.

Il est également prévu un réservoir d'eau porté par le véhicule agricole T, des buses de sortie, assurant l'adduction d'eau par gravité du réservoir jusqu'au niveau du cône de plantation et une électrovanne d'ouverture/fermeture de l'écoulement gravitaire de cette eau.

La présente invention est maintenant décrite à l'aide d'exemples uniquement illustratifs et nullement limitatifs de la portée de l'invention, et à partir des dessins annexés, dessins sur lesquels les différentes figures représentent :
[Fig.1] représente une vue schématique de dessus d'un engin agricole équipé de deux modules de complantation selon la présente invention.
[Fig.2] représente une en perspective d'un mode de réalisation de moyens d'arrachage du dispositif de complantation.
[Fig.3] représente une vue isolée, en perspective schématique des deux modules de complantation, en perspective schématique, en position d'attente.
[Fig.4] représente une vue du module de complantation de la [Fig.3], en perspective schématique, avec les différents mouvements schématisés.
[Fig.5A] représente une vue en élévation latérale d'un module de complantation selon l'invention.
[Fig.5B] représente une vue de l'avant du mode de réalisation avec deux modules de complantation selon l'invention.
[Fig.6A] représente une vue en coupe d'une partie du module de complantation, dans le plan longitudinal, au droit du décompacteur.
[Fig.6B] représente une vue de l'arrière du mode de réalisation avec deux modules de complantation selon l'invention.

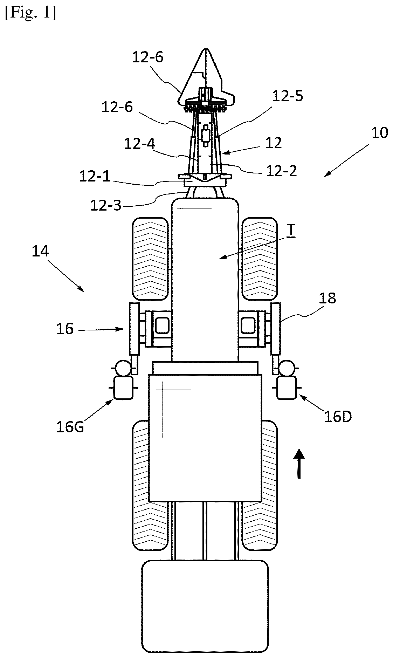

Le dispositif de complantation 10 de l'invention est illustré sur la [Fig.1]. Il comprend un véhicule agricole T du type tracteur, circulant dans l'interrangs, qui supporte des moyens d'arrachage 12 et des moyens de complantation 14.

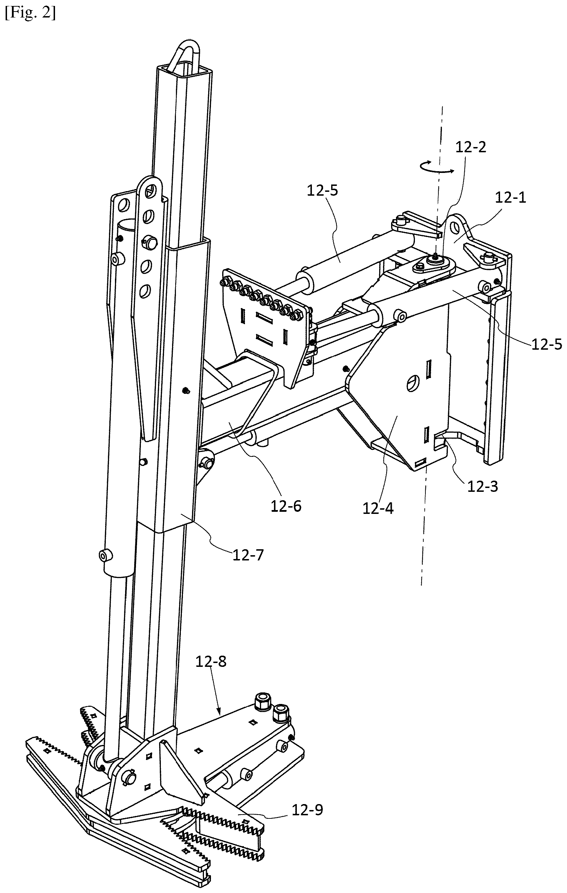

Le véhicule agricole T est muni en partie avant de moyens d'arrachage 12 destinés à retirer un cep mort, dégradé ou peu productif, dans un rang droit ou gauche. Un mode de réalisation non limitatif et très efficace, consiste en des moyens d'arrachage 12 détaillés sur la [Fig.2]. Ces moyens d'arrachage 12, de type connu, comprennent une platine de liaison mécanique 12-1, un arbre de pivotement 12-2 avec une partie fixe 12-3 solidaire de ladite platine de liaison mécanique 12-1 et une partie mobile 12-4, des actionneurs de pivotement 12-5, un bras télescopique 12-6 supportant un mât vertical muni d'une poutre 12-7, mobile en translation dont l'extrémité porte une tête d'arrachage 12-8 avec des mâchoires 12-9 susceptibles de prendre deux positions l'un ouverte et l'autre serrée. Ceci est décrit en détail dans la demande de brevet français N° 19 13399, au nom du même demandeur. Un tel dispositif permet de manoeuvrer la partie mobile 12-4 grâce aux actionneurs de pivotement 12-5. La partie mobile 12-4 supportant le bras télescopique 12-6 permet un ajustement en longueur. Le bras télescopique 12-6 supporte le mât avec sa poutre 12-7 et la tête d'arrachage 12-8 pour la placer à la hauteur voulue, c'est-à-dire à proximité du sol, au plus près des racines dudit cep. La tête d'arrache 12-8 est déplacée par pivotement du mât dans le plan horizontal vers la droite ou vers la gauche en décrivant un cercle, suivant que le cep à retirer est dans le rang à droite ou dans le rang à gauche. Les mâchoires 12-9 de la tête d'arrachage sont ouvertes afin de venir de part et d'autre du cep à arracher. Les mâchoires 12-9 sont ensuite refermées pour venir en position serrée sur le cep. Une manoeuvre verticale de la poutre 12-7 du mât et donc de la tête d'arrachage 12-8 qui en est solidaire, provoque l'arrachage du cep de la terre et si nécessaire, un dégagement par pivotement inverse amène le cep dans l'interrangs dans lequel circule le véhicule agricole T. Ceci permet de monter verticalement avec une amplitude plus importante sans porter atteinte à l'intégrité des fils de palissage. Bien entendu, tout moyen d'arrachage pourrait convenir, le but étant de retirer le cep, et la tête, par exemple, moins sophistiquée pourrait ne comprendre qu'un seule paire de mâchoires.

Les moyens d'arrachage génèrent une dépression au droit du cep lorsque celui-ci est encore suffisamment vigoureux mais de façon générale, l'arrachage est aisé et les mouvements de terre sont plutôt limités, surtout en profondeur.

Les moyens de complantation 14 du dispositif de complantation 10 selon la présente invention comprennent au moins un module de complantation 16, en l'occurrence deux modules de complantation droit 16D et gauche 16G pour travailler les rangs de vigne droit et gauche. Ces moyens de complantation 14 sont agencés pour être placés sur un châssis 18, commun, ledit châssis 18 étant apte à venir se monter, de façon fixe et amovible, sous le véhicule agricole T, plus particulièrement en son milieu, c'est-à-dire proche de son centre de gravité. Ce châssis 18 comprend des moyens de positionnement au droit du plant de vigne arraché. De tels moyens de positionnement comprennent un support tubulaire fixe 20 solidaire du véhicule agricole T et orienté parallèlement au plan de roulage dudit véhicule agricole T, donc parallèlement au sol et transversalement à la direction de déplacement dont le sens, en marche avant, est symbolisé par la flèche F.

La description qui suit concerne un module de complantation 16 et dans le cas de deux modules, ceux-ci sont parfaitement symétriques. Chaque module de complantation 16 comprend un bras 22, mobile en translation dans le support tubulaire fixe 20 du châssis 18. Des moyens de manoeuvre en translation 22-1, sous forme d'un vérin hydraulique double effet par exemple, assurent les mouvements de translation du bras 22 par rapport au support tubulaire fixe 20, perpendiculairement à la direction de déplacement et donc également perpendiculairement au rang de ceps. La fixation des moyens de manoeuvre en translation 22-1 est réalisée sur l'extrémité proximale dudit bras 22.

Le bras 22 porte à son extrémité distale un avant-bras 24, orienté verticalement pour gagner de la garde au sol. L'extrémité libre de cet avant-bras 24, supporte une poutre fixe 26, tubulaire, orientée parallèlement au plan de roulage du véhicule agricole, parallèlement à la direction de déplacement du véhicule agricole T, et en l'occurrence, orienté vers l'arrière par rapport au sens de déplacement en marche avant du véhicule agricole symbolisé par la flèche F. Cette poutre fixe 26, tubulaire, reçoit un support 28, mobile en translation horizontale dans ladite poutre fixe 26. Des moyens de manoeuvre en translation 30, sous la forme d'un vérin hydraulique double effet par exemple, assurent les mouvements de translation dudit support 28 par rapport à ladite poutre fixe 26, suivant la direction de la flèche F.

L'extrémité libre du support 28 reçoit un mât 32, orienté perpendiculairement, mobile verticalement. Ce mât comprend une face arrière 32AR et une face avant 32AV, en considérant le sens de déplacement avant du véhicule agricole T, suivant la flèche F. Sur le bord extérieur dudit mât, des garde-fil 34 sont mis en place sur toute la hauteur, de façon fixe, afin de décaler les fils de palissage au droit du mât, comme cela sera expliqué plus avant dans la description. Des moyens de manoeuvre en translation 36 sont interposés entre le support 28 et ledit mât 32, de façon à permettre au mât de disposer d'une course verticale suffisante pour les différentes opérations à conduire. L'ensemble de ces moyens de manoeuvre jusqu'au mât constituent les moyens de positionnement.

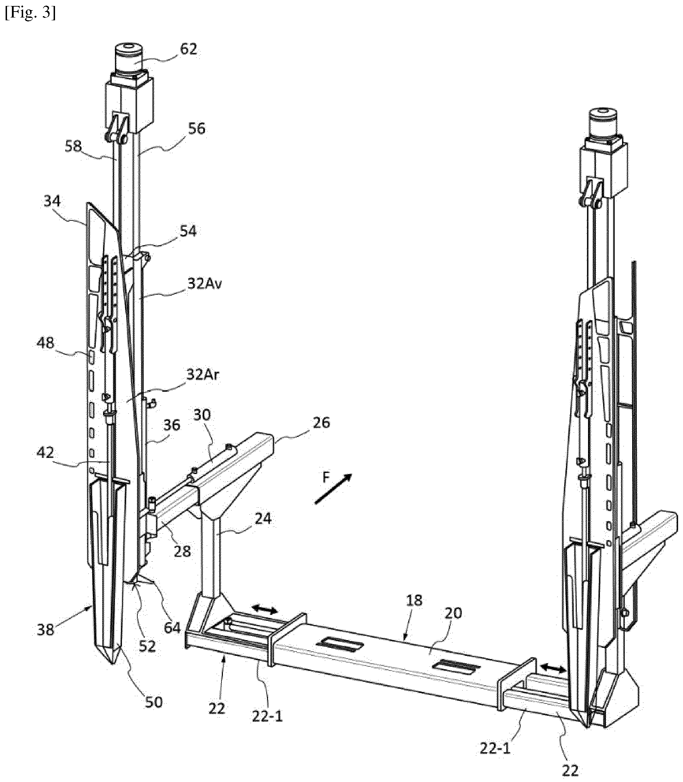

La face arrière 32AR est équipée de moyens plantoir 38 qui sont disposés sur ledit mât qui assure le positionnement et les manoeuvres dudit plantoir comme cela va être expliqué. Ces moyens plantoir 38 comportent un enfonce marquant 40, muni de moyens de manoeuvre en translation 42 d'un marquant 44 par rapport à la face arrière 32AR. L'enfonce marquant 40 comprend des moyens de maintien et de guidage 46 dudit marquant 44. Les moyens de manoeuvre en translation verticale 42 d'un marquant 44 comprennent un vérin hydraulique 48 double effet par exemple, dont une partie est fixe, en l'occurrence le corps dudit vérin solidaire de la face arrière 32AR et l'autre partie est mobile, en l'occurrence la tige dudit vérin. Cette tige de vérin, dans le mode de réalisation, est prévu pour venir en appui sur le dessus du marquant 44 maintenu verticalement par les moyens de maintien et de guidage 46 fixes, solidaires de la face arrière 32AR. Voir [Fig.3], 4, 6A et 6B, notamment.

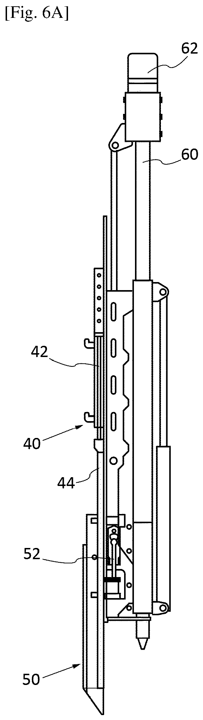

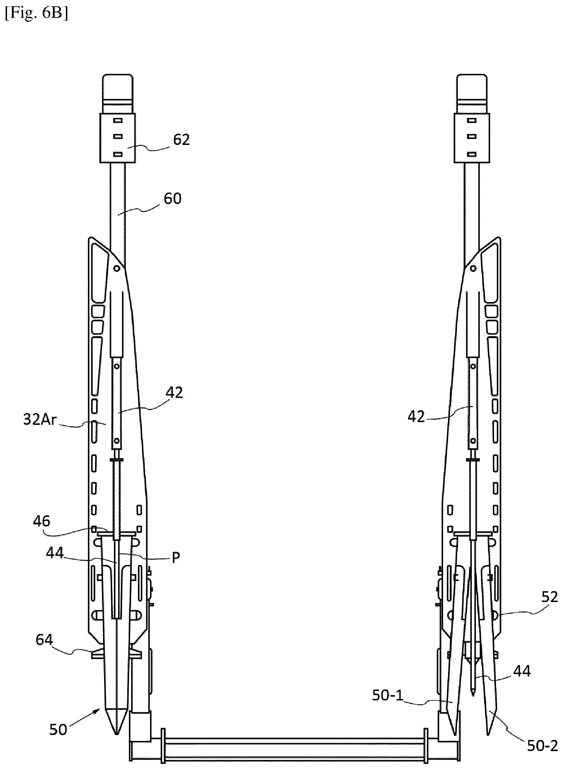

Ces moyens plantoir 38 comprennent en outre un cône creux 50 de plantation, formé par une paire de demi-cônes creux 50-1 et 50-2, comme des coquilles, ledit cône étant orienté pointe vers le bas. Chaque demi-cône creux 50-1 et 50-2 comprend ainsi une demi-base et un demi-sommet. Chaque demi-base de chaque demi-cône, en partie haute, est articulée par rapport à la face arrière 32AR pour pivoter, si bien que les demi-sommets de chacun de ces deux demi-cônes s'écartent ou se rapprochent en fonction des mouvements de pivotement des demi-bases. L'angle d'ouverture des deux demi-cônes reste faible, de l'ordre de la dizaine de degrés. Des moyens de manoeuvre 52 en pivotement des demi-bases des demi-cônes 50-1 et 50-2 sont prévus sous forme d'un vérin hydraulique double effet par demi-cône, interposé entre chacune des dites demi-bases et ladite face arrière 32AR. Les deux demi-cônes peuvent alors prendre au moins deux positions extrêmes, une position en forme de cône fermé d'introduction et une position de cône à sommet écarté, à la façon d'un speculum. On note que l'enfonce marquant 40 se déplace suivant un axe commun avec celui du cône creux 50 de plantation, les deux sont coaxiaux. Voir les [Fig.6A] et [Fig.6B].

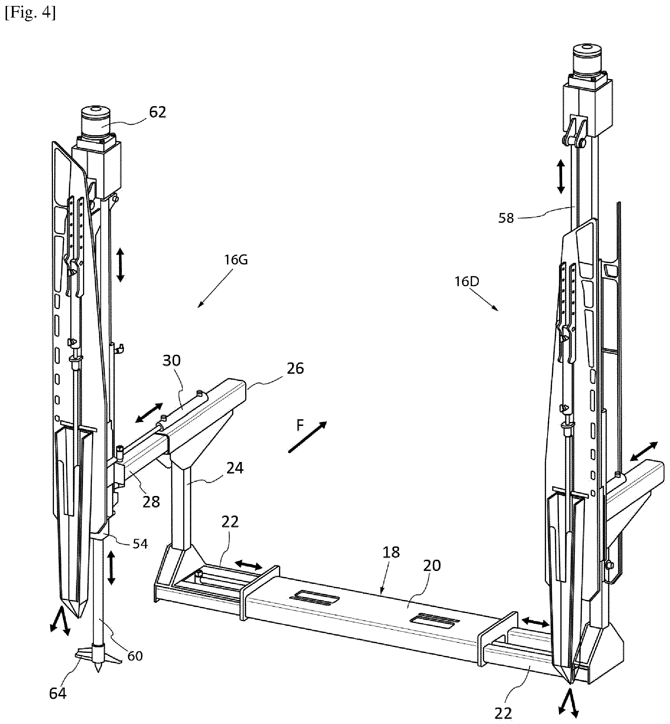

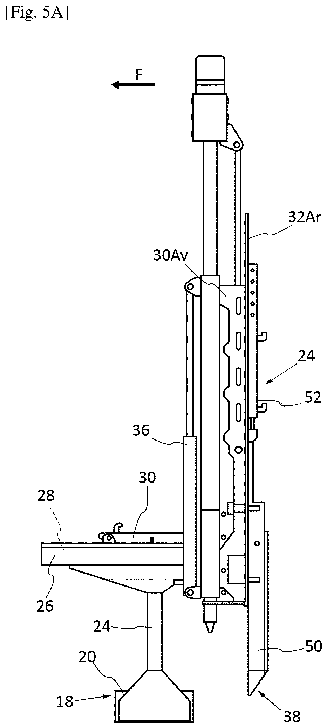

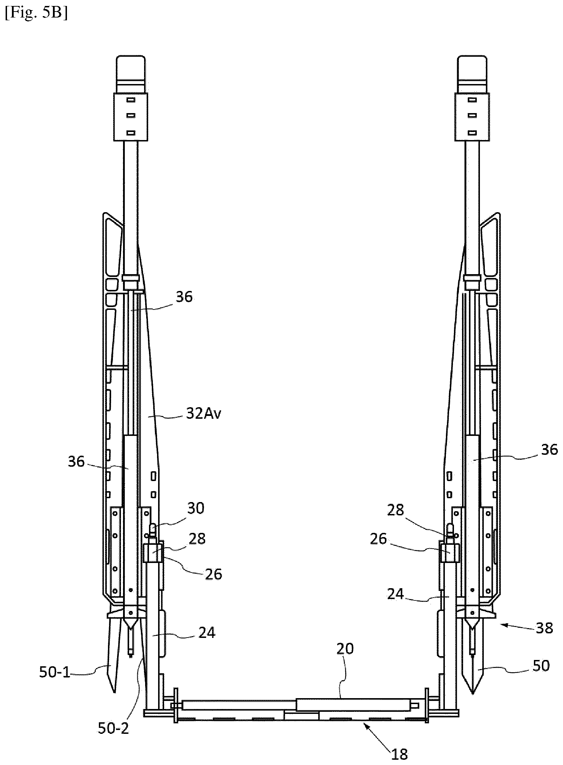

Sur la face avant 32AV, le mât 32 mobile porte un fourreau 54, orienté verticalement, dans lequel un décompacteur 56 est monté en translation verticale et en amont des moyens plantoir 50. Des moyens de manoeuvre 58 en translation verticale dudit décompacteur 56 dans ledit fourreau 54 sont prévus. Ce décompacteur 56 comprend un arbre 60, monté mobile en rotation dans le fourreau 54 et entraîné en rotation par une motorisation 62, par exemple un moteur hydraulique. L'extrémité de l'arbre mobile comprend de façon connue une hélice 64, voir la [Fig.4] et les figures 5A et 5B, notamment.

La mise en oeuvre du dispositif de complantation 10 selon l'invention et du au moins un module de complantation 16 selon la présente invention dont le dispositif est équipé est maintenant décrit. L'opérateur place son véhicule agricole dans l'interrangs ménagé entre deux rangs adjacents. Les ceps affaiblis, morts, cassés, partiellement déracinés ont été identifiés et repérés ou sont identifiables et/ou repérables.

La première étape de complantation consiste à retirer le cep identifié à l'aide des moyens d'arrachage. En l'occurrence, avec les moyens d'arrachage 12 tels que décrit selon un mode de réalisation particulier, l'opérateur avance le véhicule agricole T de façon que la tête 12-8 des moyens d'arrachage 12, soit sensiblement en vis-à-vis dudit cep identifié. Dès lors l'opérateur règle la hauteur de la poutre 12-7 par rapport au sol et au point de saisie du cep. Simultanément ou après réglage de la hauteur, suivant la dextérité de l'opérateur, celui-ci fait pivoter la partie mobile 12-4 pour amener la tête d'arrachage 12-8 au droit du cep. Les mâchoires 12-9 étant ouvertes, l'opérateur ajuste ladite tête pour que lesdites mâchoires viennent de part et d'autre du cep identifié. Dès lors, l'opérateur ferme les mâchoires pour enserrer le cep et actionne le déplacement en translation de la poutre 12-7 dans le mât qui la porte, arrachant ainsi le cep. Afin de ne pas dégrader les fils de palissage, si le cep dispose encore de racines longues et profondes, l'opérateur peut assurer une rotation afin de poursuivre la course verticale, si nécessaire. Le cep arraché est libéré des mâchoires dans l'interrangs en vue d'une collecte postérieur pour une destruction, souvent par combustion, afin de détruire les éventuels parasites ou disposé manuellement dans une benne suiveuse, adaptée. Le cep une fois retiré laisse une dépression dans le sol. Cette opération peut avoir été réalisée séparément, et décalée dans le temps, lors d'un autre intervention. L'optimisation consiste néanmoins à réaliser toute les interventions successivement, ce que permet le dispositif complet.

La complantation d'un jeune plant P est alors assurée au moyen d'au moins un des modules de complantation selon la présente invention. L'opérateur avance le véhicule agricole T jusqu'à ce que le châssis 18 rapporté sous le véhicule soit positionné au droit de la dépression laissée par l'arrachage dudit cep identifié. L'opérateur immobilise alors le véhicule agricole. L'opérateur juge alors de savoir s'il doit ou non procéder à un travail du sol suivant l'ameublissement du sol suite à l'extraction du cep. De plus suivant la saison, le sol peut être compacté. Le bras 22 du côté concerné est déplacé en translation grâce aux moyens de manoeuvre 22-1 pour que l'avant-bras 24 se situe dans l'alignement des ceps du rang, généralement en aval de la dépression concernée. Les garde-fil 34 déplacent les fils de palissage pour ne pas perturber les mouvements des éléments mobiles du module de complantation 16 et ne pas dégrader lesdits fils de palissage. L'opérateur déplace alors en translation, suivant cet alignement le support 28, grâce aux moyens de déplacement en translation 30, ceci par rapport à la poutre tubulaire 26, solidaire de l'avant-bras 24 et donc fixe. L'opérateur immobilise les mouvements lorsque le décompacteur 56 est au droit de la dépression. Le décompacteur 56 est descendu, l'arbre 60 est mis en rotation lorsque l'hélice 64 vient au contact du sol. La rotation de l'arbre 60 assure la pénétration de l'hélice dans le sol. La retenue partielle ou par à-coups de l'enfoncement et la rotation génèrent un ameublissement de la terre sur un surface au sol limitée pour ne pas porter atteinte au système racinaire des ceps adjacents tout en dégageant un espace volumique suffisant pour le développement des racines du plant P de remplacement, sur une profondeur importante.

Une fois l'opération d'ameublissement de la terre réalisée, le décompacteur 56 est ramené en position initiale. Le support 28, par déplacement en translation dans la poutre fixe 26, permet d'amener les moyens plantoir 50 au droit de la dépression initialement générée et donc au droit de la zone volumique ameublie, si cette opération a été conduite. Le mât mobile 32 est déplacé en translation vers le sol. Le cône 50 est fermé par les moyens de manoeuvre 52, c'est-à-dire que les deux demi-cônes 50-1 et 50-2 sont l'un contre l'autre. L'enfonce marquant 40, est en position haute, en appui sur le dessus d'un marquant 44, immobilisé dans les moyens de maintien et de guidage 46. Le marquant peut être un tuteur bois, en matière plastique ou en métal, ceci est indifférent, les moyens de maintien et de guidage 46 étant adaptés au type de marquant. La particularité du module 16 de complantation selon la présente invention est que la marquant porte le plant P de vigne, qui lui est attaché de façon indissociable mécaniquement, par tout lien adapté, ce lien pouvant être dégradable ou à résistance mécanique limitée afin de libérer le plant du marquant lors de la croissance. Il est à noter que le positionnement de l'ensemble marquant/plant P, dans les moyens de maintien et de guidage 46 est réalisé avantageusement par l'opérateur en début d'intervention lorsque ces moyens de maintien et de guidage 46 sont à portée. Une desserte peut être ménagée sur le véhicule agricole pour recevoir plusieurs ensembles marquant/plant P, en attente.

L'opérateur actionne les moyens de manoeuvre en translation 36 du mât mobile 32 pour le descendre afin que le cône pénètre dans la terre ameublie, sans difficulté, et sans dégradation possible. Le cône lors de son enfoncement repousse la terre et forme une empreinte en forme de cône. Dès lors en fin de la course d'enfoncement, programmée en fonction du type de marquant, les demi-cônes sont manoeuvrés pour s'écarter en partie inférieure, afin de générer a minima, un volume d'implantation sensiblement cylindrique en lieu et place d'une empreinte conique. Le marquant 44 et le plant P qu'il porte, sont alors descendus grâce aux moyens de manoeuvre en translation 42 d'un marquant 44, en l'occurrence le vérin hydraulique 48 double effet. Le marquant et le plant P, une fois introduit et enfoncés dans le sol, échappent aux moyens de maintien et de guidage 46. Le marquant 44 et son plant P sont positionnés dans ledit cylindre ainsi généré, entre les deux demi-cônes qui assurent un maintien des terres et forment une protection du marquant durant sa mise en place et surtout durant la mise en place des racines dudit plant P dans le volume d'implantation.

L'opérateur assure ensuite une remontée de l'enfonce marquant 40 et du mât mobile 32 par les moyens de manoeuvre en translation 42 et 36, les demi-cônes 50-1 et 50-2 restant en position ouverte. Une fois les demi-cônes dégagés du sol et le mât mobile 32 ramené en position haute, un déplacement du support 28 dans la poutre fixe 26, vers l'avant, dégage les deux demi-cônes 50-1 et 50-2 du plant P et du marquant 44, ce qui permet de refermer les deux demi-cônes 50-1 et 50-2 et de replacer le module de complantation 16 en position initiale. Un nouveau cycle peut reprendre sur un cep suivant.

Selon un perfectionnement de l'invention, le dispositif de complantation 10 est équipé en complément d'un réservoir d'eau 66 porté par le véhicule agricole T. De fait, des conduites avec des buses de sortie, non représentées mais de type connu en tant que telles, assurent l'adduction d'eau par gravité au niveau du cône 50. Dans l'agencement selon l'invention, les buses sont positionnées de façon avantageuse sur la partie haute du cône. Une électrovanne, également non représentée, ouvre ou ferme l'écoulement gravitaire d'un volume d'eau, à la demande. Ainsi, lors de remontée du cône, simultanément, un volume de quelques litres d'eau est émis par les buses de sortie, assurant la fonction de tassement de la terre autour du plant et du marquant pour qu'ils soient tenus dans le sol, une chasse des volumes d'air emprisonnés et un arrosage pour la reprise du plant et son enracinement dans les meilleures conditions. Des intrants adaptés peuvent être dispensés simultanément.

Le dispositif selon la présente invention est particulièrement attractif car il permet, en une seule intervention, plusieurs opérations simultanées. Le nombre d'opérateurs est réduit car il convient de disposer d'un opérateur embarqué sur le véhicule et éventuellement d'un opérateur à terre. Une benne peut aussi être attelée au véhicule agricole afin de recueillir les ceps ou morceaux de cep retirés du sol. Le travail est effectué de façon très précise et sans générer de troubles musculosquelettiques pour l'opérateur.

Bien entendu, les opérations ont été décrites avec pilotage manuel des étapes par l'opérateur mais un tel cycle peut être réalisé par un automate programmable et simplement contrôlé par l'opérateur durant ledit cycle.

## Revendications

1. Module (16) de complantation d'un jeune plant P de vigne et de son marquant (44), en lieu et place d'un cep de vigne arraché dans un rang de ceps de vigne en place, ledit module comportant un châssis (18) et des moyens de positionnement, destinés à être montés sur un véhicule agricole T, apte à se déplacer en avant suivant un sens F, ledit module (16) comporte un mât (32) mobile en translation verticale, équipé de moyens plantoirs (38) comprenant un enfonce marquant (40), muni de moyens de manoeuvre en translation verticale (42), d'un marquant (44) et dudit jeune plant P lié audit marquant (44), des moyens de maintien et de guidage (46) dudit marquant (44), un cône creux (50) de plantation, formé par une paire de demi-cônes creux (50-1, 50-2), ledit cône creux (50) étant orienté pointe vers le bas, chaque demi-cône ayant des moyens de manoeuvre (52), ledit cône (50) pouvant prendre au moins deux positions l'une avec les demi-cônes fermés et l'autre avec les demi-cônes ouverts, **caractérisé en ce que** le mât (32) mobile en translation verticale est équipé d'un décompacteur (56), montée en translation verticale par rapport audit mât, avec des moyens de manoeuvre (58) en translation verticale.

2. Module (16) de complantation d'un jeune plant P de vigne et de son marquant (44), selon la revendication 1, **caractérisé en ce que** l'enfonce marquant (40), muni de moyens de manoeuvre en translation verticale (42), d'un marquant (44) et dudit jeune plant P lié audit marquant (44), est disposé coaxialement avec le cône creux (50) de plantation.

3. Module (16) de complantation d'un jeune plant P de vigne et de son marquant (44), selon la revendication 1, **caractérisé en ce que** le décompacteur (56) comprend un arbre (60), monté mobile en rotation et entraîné en rotation par une motorisation (62), ledit arbre portant à son extrémité une hélice (64).

4. Module (16) de complantation d'un jeune plant P de vigne et de son marquant (44) selon la revendication 3, **caractérisé en ce que** le décompacteur (56) est disposé en amont des moyens plantoir (50) par rapport au sens avant de déplacement F.

5. Module (16) de complantation d'un jeune plant P de vigne et de son marquant (44), selon l'une quelconque des revendications précédentes, **caractérisé en ce que** le châssis (18) comprend un support tubulaire fixe (20) avec un bras (22), mobile en translation dans ledit support tubulaire fixe (20), des moyens de manoeuvre en translation (22-1) disposés sur l'extrémité proximale dudit bras (22), un avant-bras (24) porté par l'extrémité distale dudit bras (22), orienté verticalement, une poutre fixe (26), tubulaire, solidaire dudit avant-bras (24), orientée parallèlement au plan de roulage du véhicule agricole et parallèlement à la direction de déplacement F du véhicule agricole T, et un support (28), mobile en translation horizontale dans ladite poutre fixe (26), équipé de moyens de manoeuvre en translation (30) dudit support (28) par rapport à ladite poutre fixe (26), ledit support (28) recevant le mât (32) mobile en translation verticale.

6. Module (16) de complantation d'un jeune plant P de vigne et de son marquant (44), selon l'une quelconque des revendications précédentes, **caractérisé en ce qu'**il comprend des gardes-fils (34).

7. Dispositif de complantation (10), comprenant un véhicule agricole T, équipé d'au moins un module de complantation (16) selon l'une des revendications précédentes et des moyens (12) d'arrachage d'un cep de vigne identifié.

8. Dispositif de complantation (10), selon la revendication 7, **caractérisé en ce que** les moyens d'arrachage (12) sont disposés à l'avant dudit véhicule agricole et comprennent une tête d'arrachage (12-8) munie d'au moins une mâchoire (12-9) destinées à venir enserrer le cep identifié à arracher et des moyens de manoeuvre en translation verticale (12-7) de ladite tête d'arrachage (12-8).

9. Dispositif de complantation (10), selon la revendication 8, **caractérisé en ce que** les moyens d'arrachage (12) sont montés pivotants avec des moyens de manoeuvre (12-5) en pivotement.

10. Dispositif de complantation (10), selon l'une des revendication 7 à 9, **caractérisé en ce qu'**il comprend un réservoir d'eau (66) porté par le véhicule agricole T, des buses de sortie, assurant l'adduction d'eau par gravité du réservoir jusqu'au niveau du cône (50) de plantation et une électrovanne d'ouverture/fermeture de l'écoulement gravitaire de cette eau.

## Patentansprüche

1. Modul (16) zum Einpflanzen einer jungen Weinrebe P und ihres Markierers (44) an der Stelle eines herausgerissenen Rebstocks in einer Reihe von bestehenden Rebstöcken, wobei das Modul ein Gestell (18) und Positionierungsmittel umfasst, die dazu bestimmt sind, auf einem landwirtschaftlichen Fahrzeug T montiert zu werden, das dazu geeignet sind, sich in einer Richtung F vorwärts zu bewegen, wobei das Modul (16) einen vertikal verschiebbaren Mast (32) umfasst, der mit Pflanzmitteln (38) ausgestattet ist, die einen Markierer-Eintreiber (40) umfassen, der mit vertikal verschiebbaren Manövriermitteln (42), einem Markierer (44) und der Jungpflanze P, die mit dem Markierer (44) verbunden ist, versehen ist, Mittel zum Halten und Führen (46) des Markierers (44), einen Hohlkegel (50) zur Bepflanzung, der aus einem Paar hohler Halbkegel (50-1, 50-2) gebildet wird, wobei der Hohlkegel (50) mit der Spitze nach unten ausgerichtet ist und jeder Halbkegel Manövriermittel (52) aufweist, wobei der Kegel (50) mindestens zwei Positionen einnehmen kann, eine mit den geschlossenen Halbkegeln und die andere mit den offenen Halbkegeln, **dadurch gekennzeichnet, dass** der vertikal verschiebbare Mast (32) mit einem Grubber (56) ausgestattet ist, der vertikal verschiebbar in Bezug auf den Mast montiert ist, mit vertikal verschiebbaren Manövriermitteln (58).

2. Modul (16) zum Einpflanzen einer jungen Weinrebe P und ihres Markierers (44) nach Anspruch 1, **dadurch gekennzeichnet, dass** der Markierer-Eintreiber (40), der mit vertikal verschiebbaren Manövriermitteln (42), einem Markierer (44) und der Jungpflanze P, die mit dem Markierer (44) verbunden ist, versehen ist, koaxial mit dem Hohlkegel (50) zur Bepflanzung angeordnet ist.

3. Modul (16) zum Einpflanzen einer jungen Weinrebe P und ihres Markierers (44) nach Anspruch 1, **dadurch gekennzeichnet, dass** der Grubber (56) eine Welle (60) umfasst, die drehbar montiert ist und durch einen Motorantrieb (62) in Drehung versetzt wird, wobei die Welle an ihrem Ende eine Schraube (64) trägt.

4. Modul (16) zum Einpflanzen einer jungen Weinrebe P und ihres Markierers (44) nach Anspruch 3, **dadurch gekennzeichnet, dass** der Grubber (56) in Bezug auf die Vorwärtsbewegungsrichtung F den Pflanzmitteln (50) vorgelagert angeordnet ist.

5. Modul (16) zum Einpflanzen einer jungen Weinrebe P und ihres Markierers (44) nach einem der vorstehenden Ansprüche, **dadurch gekennzeichnet, dass** das Gestell (18) einen festen rohrförmigen Träger (20) mit einem Arm (22), der in dem festen rohrförmigen Träger (20) translatorisch beweglich ist, translatorische Manövriermittel (22-1), die am proximalen Ende des Arms (22) angeordnet sind, einen Unterarm (24), der von dem distalen Ende des Arms (22) getragen wird und vertikal ausgerichtet ist, einen festen rohrförmigen Balken (26), der mit dem Unterarm (24) fest verbunden ist und parallel zur Rollebene des landwirtschaftlichen Fahrzeugs und parallel zur Fahrtrichtung F des landwirtschaftlichen Fahrzeugs T ausgerichtet ist, und einen Träger (28) umfasst, der in dem festen Balken (26) horizontal verschiebbar ist und mit translatorischen Manövriermitteln (30) des Trägers (28) relativ zu dem festen Balken (26) ausgestattet ist, wobei der Träger (28) den vertikal verschiebbaren Mast (32) aufnimmt.

6. Modul (16) zum Einpflanzen einer jungen Weinrebe P und ihres Markierers (44) nach einem der vorstehenden Ansprüche,
**dadurch gekennzeichnet, dass** es Schutzgitter (34) umfasst.

7. Vorrichtung zum Einpflanzen (10), umfassend ein landwirtschaftliches Fahrzeug T, das mit mindestens einem Modul zum Einpflanzen (16) nach einem der vorstehenden Ansprüche und Mitteln (12) zur Rodung eines identifizierten Rebstocks ausgestattet ist.

8. Vorrichtung zum Einpflanzen (10) nach Anspruch 7,
**dadurch gekennzeichnet, dass** die Rodungsmittel (12) an der Vorderseite des landwirtschaftlichen Fahrzeugs angeordnet sind und einen Rodungskopf (12-8) umfassen, der mit mindestens einer Klaue (12-9) versehen ist, die dazu bestimmt ist, den identifizierten, zu rodenden Rebstock zu umklammern, sowie vertikal verschiebbare Manövriermittel (12-7) des Rodungskopfes (12-8).

9. Vorrichtung zum Einpflanzen (10) nach Anspruch 8,
**dadurch gekennzeichnet, dass** die Rodungsmittel (12) schwenkbar mit schwenkbaren Manövriermitteln (12-5) montiert sind.

10. Vorrichtung zum Einpflanzen (10) nach einem der Ansprüche 7 bis 9, **dadurch gekennzeichnet, dass** sie einen vom landwirtschaftlichen Fahrzeug T getragenen Wassertank (66), Austrittsdüsen, die die Wasserversorgung durch Schwerkraft aus dem Tank bis auf die Höhe des Kegels (50) zur Bepflanzung gewährleisten, und ein Magnetventil zum Öffnen/Schließen des Ausflusses dieses Wassers durch Schwerkraft umfasst.

## Claims

1. A companion planting module (16) for a vine seedling P and its marker (44), instead and in place of a vine plant pulled from a row of vine plants in place, said module comprising a chassis (18) and positioning means, intended to be mounted on an agricultural vehicle T, able to move forward in a direction F, said module (16) comprises a mast (32) movable in vertical translation, equipped with planting means (38) comprising a marker driver (40), provided with means (42) for maneuvering a marker (44) and said seedling P connected to said marker (44) in vertical translation, means (46) for holding and guiding said marker (44), a hollow planting cone (50), formed by a pair of hollow half-cones (50-1, 50-2), said hollow cone (50) being oriented tip down, each half-cone having maneuvering means (52), said cone (50) being able to take at least two positions, one with the half-cones closed and the other with the half-cones open, **characterized in that** the mast (32) movable in vertical translation is equipped with a loosener (56), mounted in vertical translation relative to said mast, with means (58) for maneuvering in vertical translation.

2. The companion planting module (16) for a vine seedling P and its marker (44), according to claim 1, **characterized in that** the marker driver (40), provided with means (42) for maneuvering a marker (44) and said seedling P connected to said marker (44) in vertical translation, is arranged coaxially with the hollow planting cone (50).

3. The companion planting module (16) for a vine seedling P and its marker (44), according to claim 1, **characterized in that** the loosener (56) comprises a shaft (60), rotatably mounted and driven in rotation by a motor (62), said shaft bearing a propeller (64) at its end.

4. The companion planting module (16) for a vine seedling P and its marker (44) according to claim 3, **characterized in that** the loosener (56) is arranged upstream of the planting means (50) relative to the forward direction of movement F.

5. The companion planting module (16) for a vine seedling P and its marker (44), according to any of the preceding claims, **characterized in that** the chassis (18) comprises a fixed tubular support (20) with an arm (22), movable in translation in said fixed tubular support (20), means for maneuvering in translation (22-1) arranged on the proximal end of said arm (22), a forearm (24) carried by the distal end of said arm (22), oriented vertically, a tubular fixed beam (26), secured to said forearm (24), oriented parallel to the rolling plane of the agricultural vehicle and parallel to the direction of movement F of the agricultural vehicle T, and a support (28), movable in horizontal translation in said fixed beam (26), equipped with means (30) for maneuvering said support (28) in translation relative to said fixed beam (26), said support (28) receiving the movable mast (32) in vertical translation.

6. The companion planting module (16) for a vine seedling P and its marker (44) according to any one of the preceding claims, **characterized in that** it comprises wire guards (34).

7. A companion planting (10), comprising an agricultural vehicle T, equipped with at least one companion planting module (16) according to one of the preceding claims and means (12) for pulling out an identified vine plant.

8. The companion planting device (10) according to claim 7,
**characterized in that** the pulling-out means (12) are arranged at the front of said agricultural vehicle and comprise a pulling-out head (12-8) provided with at least one jaw (12-9) intended to clamp the identified plant to be pulled out and means (12-7) for maneuvering said pulling-out head (12-8) in vertical translation.

9. The companion planting device (10) according to claim 8,
**characterized in that** the pulling-out means (12) are mounted pivoting with pivoting maneuvering means (12-5).

10. The companion planting device (10) according to one of claims 7 to 9, **characterized in that** it comprises a water tank (66) carried by the agricultural vehicle T, outlet nozzles, ensuring the intake of water by gravity from the tank up to the planting cone (50) and a solenoid valve for opening/closing the gravitational flow of this water.
